# EUROPÄISCHE PATENTSCHRIFT

(11) **EP 1 156 463 B1**
(45) Veröffentlichungstag und Bekanntmachung des Hinweises auf die Patenterteilung: **26.04.2006**
(21) Anmeldenummer: 01106948.1
(22) Anmeldetag: 20.03.2001
(51) Int. Cl.: G09B 23/28

(54) **Dentalmodell**
Dental model
Modèle dentaire

(30) Priorität: 16.05.2000 DE 10023842
(43) Veröffentlichungstag der Anmeldung: 21.11.2001
(73) Patentinhaber: Firma Ivoclar Vivadent AG, 9494 Schaan (LI)
(72) Erfinder: Raffeiner, Oscar, 39012 Meran (IT)
(74) Vertreter: Baronetzky, Klaus

(56) Entgegenhaltungen:
- DE-A- 3 900 168
- FR-A- 2 226 086
- GB-A- 2 122 796
- US-A- 1 512 745
- US-A- 2 266 434
- US-A- 2 750 670
- US-A- 3 458 936

## Beschreibung

Die Erfindung betrifft ein Dentalmodell, gemäß dem Oberbegriff von Anspruch 1, das insbesondere für Übungszwecke und für Demonstrationszwecke, vorzugsweise für das Präparieren von kariösen Stellen und die Versorgung der Kavität durch Füllungsmaterialien geeignet sein soll. Am Dentalmodell können ferner alle Arbeiten ausgeführt werden, die ein Zahnarzt am Patienten vornimmt.

Ein derartiges Übungs-Dentalmodell ist beispielsweise aus der US-PS 38 86 661 bekannt. Bei dieser Lösung ist ein Übungszahnsatz in eine Halteplatte einsetzbar. Über verschiedene Elemente ist auch die Ausbildung eines natürlichen Kiefers nachgebildet. Ein Vorteil dieser Lösung gegenüber weiteren bekannten Lösungen, bei denen die Zähne nur insgesamt ausgetauscht werden können, besteht darin, dass je nach abgeschlossenem Übungsergebnis der bearbeitete Zahn ausgetauscht werden kann, so dass die laufenden Kosten insofern geringer sind. Andererseits müssen jedoch spezielle Zähne für dieses Modell für die Ersatzbeschaffung erzeugt und bereitgehalten werden, so dass eine spezielle Lagerhaltung erforderlich ist.

Auch aus der US-A-2 750 670 ist ein Übungsmodell mit einzeln herausnehmbaren künstlichen Zähnen bekannt, die von einer dem natürlichen Kiefer nachgebildeten Halteplatte aufgenommen werden. Die künstlichen Zähne sind in ihrer Zahn- als auch in ihrer Wurzelform dem natürlichen Vorbild nachempfunden. Insofern besteht auch bei dieser Lösung das bereits weiter oben angesprochene Problem der Ersatzbeschaffung und speziellen Lagerhaltung.

Ferner ist es bereits vorgeschlagen worden, ein Dentalmodell zu realisieren, das ein hartes Führungsmaterial mit einem elastischen Material als Lagermaterial kombiniert. Hiermit soll die Lagersteifheit des natürlichen Kieferknochens simuliert werden, wobei durch die Verwendung von Silikonkautschuk erreicht werden soll, dass einzelne Zähne entnommen werden können, jedoch nicht versehentlich herausfallen. Bei derartigen Lösungen ist jedoch die Führung und Halterung des Zahns selbst elastisch. Der Zahn weicht damit seitlich aus, wenn Druck ausgeübt wird, so dass ein derartiger Zahn beispielsweise für Modellierarbeiten geeignet ist. Jedoch muss beispielsweise beim Bohren teils auch recht starker seitlicher Druck ausgeübt werden, so dass derartige elastisch gelagerte Kiefermodelle ungeeignet sind.

Ein weiteres Problem derartiger Dentalmodelle ist die lösbare Lagerung der Zähne. Z.B. wird in der GB-A-2 122 796 ein Zahnmodell beschrieben, bei dem die feste Halterung der auswechselbaren Modellzähne durch Hinterschneidungen an den Stümpfen der Modellzähne in einem diese aufnehmenden elastischen Kieferkamm erreicht werden soll. Wenn der Zahn elastisch haftend in der zugehörigen Wurzelausnehmung gelagert ist, verschlechtert in die Ausnehmung hineinrutschender Bohrstaub nach und nach die Hafteigenschaften, so dass die Ausnehmungen entweder regelmässig aufwendig gesäubert werden müssen oder kurzerhand das Modell ausgetauscht werden muss.

Bei Dentalmodellen, die die Zähne fest lagern, muss eine besondere Kupplung realisiert werden, um eine einerseits feste, andererseits aber lösbare Unterstützung des Zahns zu gewährleisten. Auch bei den bereits vorgeschlagenen kombinierten Lagerungen aus teils festen und teils elastischen Ausnehmungsbereichen kann der Bohrstaub in den im Bereich der Festlagerung sich ergebenden Spalt rutschen.

Demgegenüber liegt der Erfindung die Aufgabe zugrunde, ein Dentalmodell gemäß dem Oberbegriff von Anspruch 1 zu schaffen, das hinsichtlich der einfachen und zuverlässigen Austauschbarkeit von einzelnen Zähnen, der Lagersicherheit und der Standfestigkeit der Zähne, verbessert ist. Das Dentalmodell soll mehrfach verwendbar sein und weitgehend in Form und Material einem Patientenfall entsprechen.

Dieser Aufgabe wird erfindungsgemäß durch Anspruch 1 gelöst. Vorteilhafte Weiterbildungen ergeben sich aus den Unteransprüchen.

Gemäß einem besonders vorteilhaften Gesichtspunkt der vorliegenden Erfindung lässt sich mit der erfindungsgemäßen Halterung zum einem der Zahn an der Halteplatte festhalten und abstützen. Zum anderen wird zugleich automatisch eine Abdichtung der Lagerung des Zahns in der betreffenden Ausnehmung in der Halteplatte gewährleistet, so daß kein Bohrstaub in diesen kritischen Bereich gelangen kann. Der Stiftzahn läßt sich damit dauerhaft und stabil auch gegen seitliche Kräfte, wie sie beispielsweise durch einen Dentalbohrer eingeleitet werden, in der aus steifem Material bestehenden Halteplatte festhalten. Zusätzlich umgibt die Zahnfleischmasse den Zahn teilweise, so daß eine Simulation eines Kiefers eines Patienten vorliegt. Die Abstützung des Zahnes durch den Zahnstumpf einerseits und Friktionselemente andererseits bewirkt, daß der Zahn beim Austausch gegen einen anderen exakt die gleiche Position einnimmt.

Besonders günstig ist es auch, daß sich ein naturnahes Erscheinungsbild des Dentalmodells ergibt, wobei die Zahnfleischmasse dem natürlichen Zahnfleisch entsprechend eingefärbt sein kann. Die Haltekraft der Zahnfleischmasse läßt sich in weiten Bereichen an die Erfordernisse anpassen. So kann eine Hinterschneidung vorgesehen sein, die gegen eine Hinterschneidung des Zahns wirkt und eine lösbare Raste bildet. Die Zahnfleischmasse kann auch entsprechende Hinterschneidungen aufweisen, die gegen Hinterschneidungen der Halteplatte wirken. Bevorzugt weisen hierbei sowohl die Halteplatte als auch die Zähne je vorstehende Zapfen und die Zahnfleischmasse entsprechende Ausnehmungen auf. Besonders günstig in dem Zusammenhang ist es, wenn auch der die Ausnehmungen für die Zähne bildende künstliche Kieferkamm an seinen Seitenflächen rauhe Oberflächen aufweist. Hierdurch ist gewährleistet, daß auch dort ein gewisser Formschluß zwischen Halteplatte und Zahnfleischmasse entsteht, der die Haftung der Zahnfleischmasse auf der Halteplatte fördert.

Es versteht sich, daß die Vorspannung der Zahnfleischmasse beim Arretieren auf den Kieferkamm bzw. gegenüber den Zähnen in weiten Bereichen an die Erfordernisse anpaßbar ist. Die Zahnfleischmasse kann beispielsweise aus rosa eingefärbtem Silikon bestehen, das in begrenztem Maße durchscheinend ist, so daß der Verlauf des Zahns für den angehenden Zahnarzt, der das Dentalmodell zu Übungszwecken verwendet, zumindest im Frontzahnbereich ersichtlich ist.

Erfindungsgemäß besonders günstig ist es, daß in Großserie hergestellte Zähne für das erfindungsgemäße Dentalmodell verwendet werden können. Hierzu sind die erfindungsgemäßen Zähne in an sich bekannter Weise mehrschichtig aufgebaut und mit einem aus preisgünstigen Kunststoff hergestellten Zahnstumpf versehen. Vorzugsweise sind die Zähne jedoch aus einem Material hergestellt. Der Zahnstumpf paßt in die je zugehörige Ausnehmung im Kieferkamm der Halteplatte, wodurch der Zahn aufgrund der konischen Ausgestaltung sowohl der Ausnehmung als auch des Zahnstumpfs bereits fest gelagert ist.

Bevorzugt unmittelbar anschließend an den von der Ausnehmung umschlossenen Bereich des Zahnstumpfs weist der Zahn einen Zapfen oder Vorsprung auf, der sich seitlich wegerstreckt und eine Hinterschneidung bildet. Der Zapfen oder Vorsprung greift in eine recht genau passend ausgebildete Ausnehmung in dem Dentalmodell ein, so daß der Zahn auch durch dieses Friktionselement festgehalten wird. Die Zahnfleischmasse weist an mehreren Stellen gegen die Halteplatte wirkende Hinterschneidungen auf, so daß sie fest an den Zähnen und am Modell haftet.

Das erfindungsgemäße Modell kann als Oberkiefer- und Unterkiefermodell verwendet werden. Dennoch ist eine leichte Lösbarkeit des Zahns in der Führung aus der Friktion und in der Ausnehmung gewährleistet, so daß der Zahn nach einer Übung ohne weiteres ausgetauscht werden kann. Erfindungsgemäß besonders günstig ist es auch, daß die Basisplatte aus einem preisgünstigen Kunststoff als Massenartikel erzeugt werden kann. Dennoch läßt sich die Halteplatte auch in einen Artikulator einsetzen, so daß eine Kausimulation möglich ist und beispielsweise bei der Anfertigung von Brücken die Okklusion überprüft werden kann. Hierzu werden kurzerhand ein oder zwei Zähne aus dem Dentalmodell entfernt, so daß ein Arbeitsmodell für die Brückenfertigung entsteht.

Gemäß einem vorteilhaften Gesichtspunkt der Erfindung sind für gleiche oder einander entsprechende Zähne gleiche Formen der Ausnehmung und des zugehörigen Zahnstumpfes vorgesehen. So ist es möglich, die für ein Dentalmodell bereitzuhaltenden unterschiedlichen Zahnformen zu reduzieren, wobei dennoch eine unverwechselbare Einsteckbarkeit gegeben ist.

Weitere Einzelheiten, Vorteile und Merkmale ergeben sich aus der nachfolgenden Beschreibung eines Ausführungebeispiels anhand der Zeichnung.

**Es zeigen:**
- Fig. 1: einen schematisch angedeuteten Schnitt entlang der Linie I-I aus Fig. 3, zur Darstellung eines Details einer erfindungsgemäßen Dentalplatte;
- Fig. 2: einen schematisch angedeuteten Schnitt entlang der Linie II-II aus Fig. 3, zur Darstellung eines Details einer erfindungsgemäßen Dentalplatte; und
- Fig. 3: eine Draufsicht auf eine Dentalplatte in einer Ausführungsform der Erfindung in Draufsicht.

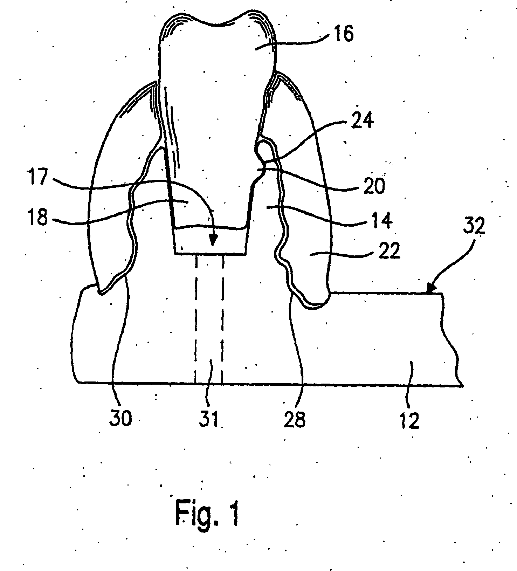

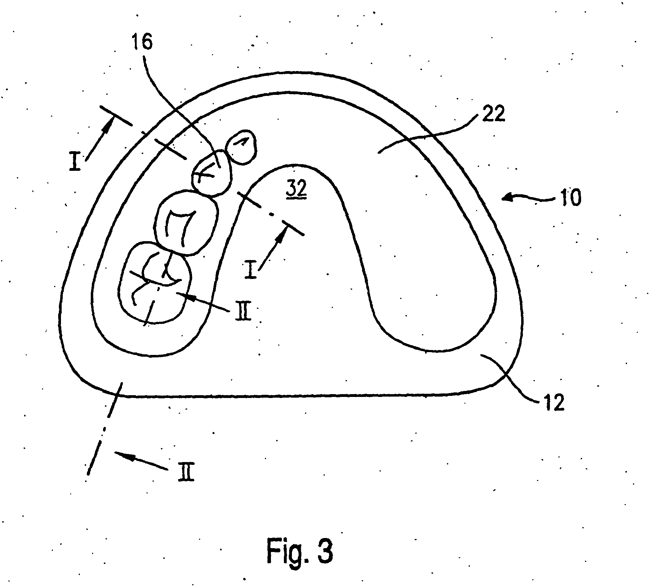

Das in Fig. 3 in der Draufsicht dargestellte Dentalmodell 10 ist in einer wesentlichen Einzelheit in Fig. 1 im Schnitt dargestellt. Das Dentalmodell weist eine Halteplatte 12 auf, die einstückig ausgebildet ist und einen Kieferkamm 14 trägt, der Vielzahl von Ausnehmungen aufweist, die für die Aufnahme von Zähnen 16 geeignet ausgebildet sind. von Zähnen 16 geeignet ausgebildet sind.

In Fig. 1 ist ein Zahn schematisch dargestellt. Eine Ausnehmung 17 weist schräge, nach oben divergierende Seiteinflanken auf. Hierzu passend weist der Zahn 16 einen Zahnstumpf 18 auf, der konisch ausgebildet ist. Der Zahnstumpf 18 und die Ausnehmung 17 sind nicht-kreisförmig, sondern bevorzugt oval, und die Passung ist so gewählt, daß zwischen dem Zahnstumpf 18 und dem Boden der Ausnehmung 17 ein gewisser Freiraum verbleibt.

Aufgrund des geringen Konuswinkels hält der Zahn 16 bereits von sich aus recht gut in der Ausnehmung 17.

Unmittelbar anschließend an den Zahnstumpf 18 erstreckt sich ein Zapfen 20 seitlich weg, der für die exakte Abstützung des Zahns 16 dient, wie es nachstehend erläutert ist. Der Zapfen 20 liegt auf den Kieferkamm 14 auf, wobei die Klemmwirkung zwischen Zahnstumpf 18 und Ausnehmung 17 nicht beeinträchtigt wird. Der Konuswinkel des Zahnstumpfs 18 beträgt bevorzugt zwischen 2° und 20°, vorzugsweise zwischen 5° und 12°, und insbesondere etwa 8°. Mit dieser Ausgestaltung läßt sich eine lösbare Klemmung gewährleisten.

Den Kieferkamm umgebend und diesen wie auch einen Teil der Zähne 16 intensiv umhüllend ist eine elastische Masse als Zahnfleischmasse 22 vorgesehen, die eine Verbindung zwischen der Halteplatte 12 und den Zähnen 16 sicherstellt. Die Zahnfleischmasse 22 ist aus zahnfleischfarben eingefärbtem Silikon und umschließt die Zähne in einer Weise, wie auch das natürliche Zahnfleisch die Zähne umschließt. Der Kieferkamm 14 weist eine Ausnehmung 24 auf, in die recht genau der Zapfen 20 paßt. Der Zapfen 20 bildet insofern eine Hinterschneidung gegen eine Seitenfläche der Ausnehmung 24, deren elastischer Widerstand für das Ausziehen des Zahns 16 überwunden werden muß.

Erfindungsgemäß besonders günstig ist es, daß die Ausnehmung 24 im oberen Bereich des Kieferkamms 14 durch den nockenförmigen Zapfen 20 gehalten ist. Dort ist der Kieferkamm noch vergleichsweise elastisch, so daß ein Herausziehen des Zahns möglich ist. Die Lagerung zwischen Ausnehmung 24 und Zapfen 20 unterstützt die Friktionslagerung des Zahnstumpfs 18 in der Ausnehmung 17.

Bevorzugt liegt die Zahnfleischmasse 22 mit leichter Vorspannung an den Zähnen 16 an. Herabfallendes Bohrmehl kann dann nicht in den Lagerspalt eindringen.

Ferner weist die Zahnfleischmasse dem Kieferkamm 14 zugewandt strukturierte Oberflächen 28 und 30 auf. Diese Oberflächen sind ein Negativabbild der je zugehörigen Oberflächen des Kieferkamms 14, so daß auch insofern eine Stabilisierung und Verbesserung der Lagerung zwischen Halteplatte 12 und Zahnfleischmasse 22 gegeben ist.

In dem in Fig. 1 dargestellten Ausführungsbeispiel ist eine Bohrung oder Durchtrittsausnehmung 31 so vorgesehen, daß sie die Halteplatte 12 durchtritt. Sie erstreckt sich zwischen der Unterseite der Halteplatte 12 und der Ausnehmung 17 etwa in deren Mitte. Über diese Bohrung 31 läßt sich der Zahn 16 bei Bedarf mit einem geeigneten Gegenstand, z.B. einer dicken Nadel, ausdrücken. Mit dieser Lösung läßt sich trotz der sehr festen und bohrstabilen Lagerung des Zahns auf der Halteplatte 12 der Zahn bei Bedarf auswechseln.

Ferner ist vorgesehen, daß die Zahnfleischmasse 22 etwas unterhalb der Oberseite 32 der Halteplatte endet. Hierzu weist die Halteplatte 12 passende Randanschlußvertiefungen auf, und die Zahnfleischmasse 22 ist in entsprechender Weise verlängert, wie es aus Fig. 1 ersichtlich ist. Diese Ausgestaltung trägt zur verbesserten Abstützung bei gleichzeitigero Verminderung der Verschmutzungsempfindlichkeit bei.

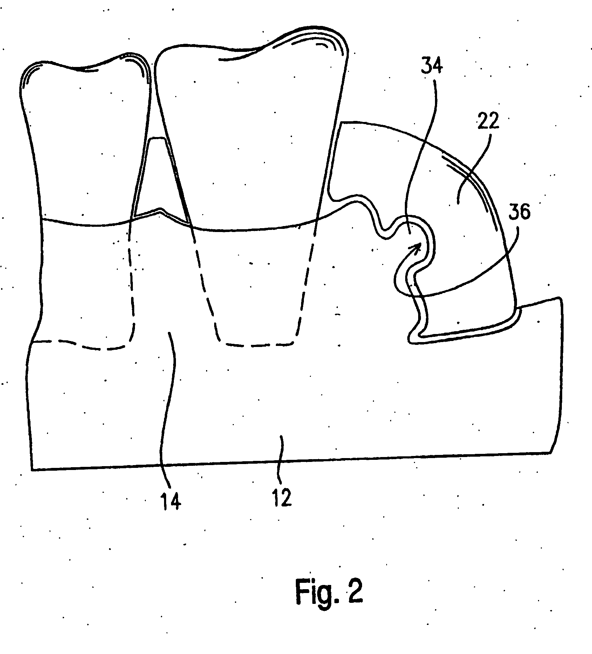

Fig. 2 zeigt, daß die Zahnfleischmasse an der Halteplatte 12 auch mit zusätzlichen Hinterschneidungen verbunden ist. In dieser Beziehung ist am rückwärtigen Ende des Kieferkamms 14 ein Zapfen 34 vorgesehen, der in eine zugehörige Ausnehmung 36 der Zahnfleischmasse 22 eindringt. Entsprechende Verbindungen sind auch über den Kieferkamm verteilt mehrfach vorgesehen, so daß die Zahnfleischmasse 22 insgesamt gut auf der Halteplatte 12 befestigt, aber aufgrund ihrer Elastizität auch lösbar gelagert ist.

Aus Fig. 3 ist ersichtlich, daß sich die Zahnfleischmasse 22 im wesentlichen U-förmig und dem Kieferkamm folgend über die Halteplatte 12 erstreckt. Die Zähne 16 sind in wirklichkeitsgetreuer Weise in einer Zahnreihe angeordnet. Das Material des Halteprofils 12 ist ein recht steifes, aber preisgünstiges Kunststoffmaterial, z.B. ein Epoxidharz. Aufgrund der schlanken Ausbildung des Kieferkamms 14 ist jedoch eine gewisse Elastizität vorhanden, so daß der angehende Zahnarzt die gleichen mechanischen Verhältnisse vorfindet, wie er sie später im Mund des Patienten antrifft.

Die Zähne 16 sind aus zwei oder mehreren Schichten hergestellt. Vorzugsweise haben sie eine Schneide- und Dentinschicht, wobei zusätzlich noch der Zahnstumpf 18 als weitere Schicht hinzukommt. Die Schneide- und Dentinschicht bzw. der Zahnhals ist der Härte eines natürlichen Zahnes weitgehend angeglichen, so daß der übende Student am Dentalmodell die gleichen Gegebenheiten vorfindet, wie wenn er an natürlichen Zähnen eines Patienten arbeiten würde.

Die Zähne 16 sind aus einem Compositmaterial hergestellt und sie werden industriell vorgefertigt. Solche Materialien wurden beispielsweise in der DE 24 03 211 C2 oder in der DE 40 29 230 C2 beschrieben, deren Offenbarung Bestandteil dieser Anmeldung ist.

## Patentansprüche

1. Dentalmodell, insbesondere für Übungszwecke, mit einer Halteplatte mit Ausnehmungen für künstliche Zähne, die je einen Zahnstumpf aufweisen, der in die betreffende Ausnehmung passt, wobei
eine Zahnfleischmasse (22) sowohl die Zähne (16) der Zahnreihe als auch die Ausnehmungen übergreift und die Zähne (16) an der Halteplatte (12) und je in ihren Ausnehmungen (17) mit Friktion lösbar gehalten sind, **dadurch gekennzeichnet, dass**
die Zähne (16) auf einem die Ausnehmungen aufnehmenden Kieferkamm (14) elastisch klemmend gehalten sind, wobei der Kieferkamm (14) und die Halteplatte (12) eine einstückige Einheit bilden; und
die Zahnfleischmasse (22) und der aufnehmende Kieferkamm (14) trennbare, voneinander unterschiedliche Schichten sind.

2. Dentalmodell nach Anspruch 1, **dadurch gekennzeichnet, dass** die Zähne eine Hinterschneidung aufweisen, die gegen je eine Hinterschneidung der Halteplatte (12) wirkt.

3. Dentalmodell nach einem der vorhergehenden Ansprüche, **dadurch gekennzeichnet, dass** die Zähne (16) in der Halteplatte (12) elastisch haftend gehalten sind.

4. Dentalmodell nach einem der vorhergehenden Ansprüche, **dadurch gekennzeichnet, dass** die Zähne (16) in den Ausnehmungen (17) im wesentlichen spielfrei gelagert sind.

5. Dentalmodell nach einem der vorhergehenden Ansprüche, **dadurch gekennzeichnet, dass** die Ausnehmungen (17) von der Halteplatte (12) aus betrachtet divergierende Seitenflanken aufweisen und die Zähne (16) Zahnstümpfe (18) aufweisen, die zu den Seitenflanken passen.

6. Dentalmodell nach einem der vorhergehenden Ansprüche, **dadurch gekennzeichnet, dass** mehrere Hinterschneidungen der Halteplatte (12) für die Lagerung der Zahnfleischmasse (32) verteilt angeordnet sind und zu Hinterschneidungen der Zahnfleischmasse (22) passen und insbesondere die zusammenzufügenden Oberflächen durch Abdruck voneinander hergestellt sind.

7. Dentalmodell nach Anspruch 6, **dadurch gekennzeichnet, dass** die einander zugewandten Oberflächen (28, 30) von Zahnfleischmasse (22) und Halteplatte (12), insbesondere im Bereich des Kieferkamms (14), dem natürlichen Zahnfleisch nachempfundene leichte Erhebungen und Vertiefungen aufweisen, die die Haftung verbessern.

8. Dentalmodell nach einem der vorhergehenden Ansprüche, **dadurch gekennzeichnet, dass** die Zahnfleischmasse (22) dem natürlichen Zahnfleisch nachempfundene Erhebungen und Vertiefungen an ihren Außenflächen aufweist.

9. Dentalmodell nach einem der vorhergehenden Ansprüche, **dadurch gekennzeichnet, dass** die Zähne (16) großtechnisch hergestellten Zähnen entsprechen, was den Schichtaufbau angeht.

10. Dentalmodell nach Anspruch 9, **dadurch gekennzeichnet, dass** die großtechnisch hergestellten Zähne (16) an ihren Zahnstümpfen (18) abgeschnitten sind und sich bis etwas oberhalb des Grundes der je ausgebildeten Ausnehmung (17) in der Halteplatte (12) erstrecken.

11. Dentalmodell nach einem der vorhergehenden Ansprüche, **dadurch gekennzeichnet, dass** die Zähne (16) aus Composite, also einem mit Füllstoff gefüllten Kunststoffmaterial, bestehen, dessen Härte der Härte des natürlichen Zahns entspricht.

12. Dentalmodell nach einem der vorhergehenden Ansprüche, **dadurch gekennzeichnet, dass** Zahnstumpf (18) und Ausnehmungen (17) in ihrer Ausgestaltung und Lagersteifheit an die Lagersteifheit des natürlichen Kieferknochens für einen natürlichen Zahn angepasst sind.

13. Dentalmodell nach einem der vorhergehenden Ansprüche, **dadurch gekennzeichnet, dass** die Halteplatte (12) eine Randanschlussvertiefung für die Zahnfleischmasse (22) aufweist, die einen im wesentlichen bündigen Anschluss der Zahnfleischmasse (22) an die Halteplatte (12) erlaubt.

14. Dentalmodell nach einem der vorhergehenden Ansprüche, **dadurch gekennzeichnet, dass** die Zähne (16) nach Gebrauch einzeln aus der Führung in der Halteplatte (12) auslösbar sind.

15. Dentalmodell nach einem der vorhergehenden Ansprüche, **dadurch gekennzeichnet, dass** die Halteplatte (12) Durchtrittsausnehmungen aufweist, die sich nach der Art von Bohrungen (31) unten an die Ausnehmungen (17) für die Zähne (16) anschließen.

16. Dentalmodell nach einem der vorhergehenden Ansprüche, **dadurch gekennzeichnet, dass** die Zahnstümpfe (18) von mindestens zwei zueinander benachbarten Zähnen (16) übereinstimmen, jedoch gegenüber mindestens einem weiteren Zahnstumpf (18) unterschiedlich sind.

17. Dentalmodell nach einem der vorhergehenden Ansprüche, **dadurch gekennzeichnet, dass** die Zahnstümpfe (18) der Frontzähne einen ovalen Querschnitt aufweisen, wobei die ovale Längsachse sich in Querrichtung zum Kieferkamm (14) erstreckt.

## Revendications

1. Modèle dentaire, en particulier pour des buts d'exercice, avec une plaque de maintien avec des évidements pour des dents artificielles, qui comportent chacun une souche de dent qui s'adapte dans l'évidement correspondant, dans lequel
une masse de gencive (22) englobe aussi bien les dents (16) de la rangée de dents que les évidements, et les dents (16) sont maintenues par friction de façon détachable sur la plaque de maintien (12) et chacune dans son évidement (17), **caractérisé en ce que**
les dents (16) sont maintenues de façon serrée élastiquement sur une crête de maxillaire (14) recevant les évidements, moyennant quoi la crête de maxillaire (14) et la plaque de maintien (12) forment une unité en une pièce ; et
la masse de gencive (22) et la crête de maxillaire (14) de réception sont des couches séparables différentes l'une de l'autre.

2. Modèle dentaire selon la revendication 1, **caractérisé en ce que** les dents présentent une contre-dépouille, chacune agissant contre une contre-dépouille de la plaque de maintien (12).

3. Modèle dentaire selon l'une des revendications précédentes, **caractérisé en ce que** les dents (16) sont maintenues dans la plaque de maintien (12) de façon élastiquement adhérente.

4. Modèle dentaire selon l'une des revendications précédentes, **caractérisé en ce que** les dents (16) sont montées dans les évidements (17) essentiellement sans jeu.

5. Modèle dentaire selon l'une des revendications précédentes, **caractérisé en ce que**, vu de la plaque de maintien (12), les évidements (17) présentent des flancs latéraux divergents et **en ce que** les dents (16) comportent des souches de dent (18) qui s'adaptent aux flancs latéraux.

6. Modèle dentaire selon l'une des revendications précédentes, **caractérisé en ce que** plusieurs contre-dépouilles de la plaque de maintien (12) sont disposées de façon répartie pour faire reposer la masse de gencive (32) et s'adaptent aux contre-dépouilles de la masse de gencive (22), et **en ce qu'**en particulier les surfaces à assembler sont réalisées par empreinte l'une de l'autre.

7. Modèle dentaire selon la revendication 6, **caractérisé en ce que** les surfaces (28, 30) tournées l'une vers l'autre de la masse de gencive (22) et de la plaque de maintien (12), en particulier dans la zone de la crête du maxillaire (14), présentent des reliefs et des creux inspirés de la gencive naturelle, qui améliorent l'adhérence.

8. Modèle dentaire selon l'une des revendications précédentes, **caractérisé en ce que** la masse de gencive (22) présente à ses surfaces extérieures des reliefs et des creux inspirés de la gencive naturelle.

9. Modèle dentaire selon l'une des revendications précédentes, **caractérisé en ce que** les dents (16) correspondent du point de vue de la structure des couches à des dents fabriquées à l'échelle industrielle.

10. Modèle dentaire selon la revendication 9, **caractérisé en ce que** les dents (16) fabriquées à l'échelle industrielle sont coupées à leurs souches de dent (18) et s'étendent dans la plaque de maintien (12) jusqu'à environ au-dessus du fond de chaque évidement (17) pratiqué.

11. Modèle dentaire selon l'une des revendications précédentes, **caractérisé en ce que** les dents (16) consistent en un composite, c'est-à-dire en une matière plastique remplie d'une charge, dont la dureté correspond à la dureté de la dent naturelle.

12. Modèle dentaire selon l'une des revendications précédentes, **caractérisé en ce que** la souche de dent (18) et les évidements (17) sont adaptés dans leur configuration et dans leur rigidité d'implantation à la rigidité d'implantation de l'os maxillaire naturel pour une dent naturelle.

13. Modèle dentaire selon l'une des revendications précédentes, **caractérisé en ce que** la plaque de maintien (12) présente un renfoncement de bordure pour le raccordement pour la masse de gencive (22), qui permet un raccordement essentiellement à fleur de la masse de gencive (22) sur la plaque de maintien (12).

14. Modèle dentaire selon l'une des revendications précédentes, **caractérisé en ce qu'**après l'utilisation, les dents (16) peuvent être dégagées individuellement du guide dans la plaque de maintien (12).

15. Modèle dentaire selon l'une des revendications précédentes, **caractérisé en ce que** la plaque de maintien (12) présente des évidements de passage qui se raccordent en bas aux évidements (17) pour les dents (16) à la manière de perçages (31).

16. Modèle dentaire selon l'une des revendications précédentes, **caractérisé en ce que** les souches de dent (18) d'au moins deux dents (16) voisines l'une de l'autre coïncident, mais sont toutefois différentes d'au moins une autre souche de dent (18).

17. Modèle dentaire selon l'une des revendications précédentes, **caractérisé en ce que** les souches de dent (18) des dents de devant présentent une section ovale, dans laquelle le grand axe de l'ovale s'étend dans la direction transversale par rapport à la crête du maxillaire (14).

## Claims

1. A dental model, in particular for training purposes, having a retaining plate with recesses for artificial teeth which each have a tooth stump which fits into the relevant recess, wherein
a gum composition (22) overlaps both the teeth (16) of the set of teeth and the recesses, and on.the retaining plate (12) and in each case in their recesses (17) the teeth (16) are held releasably with friction, **characterised in that**
the teeth (16) are held elastically clamped on a jaw crest (14) accommodating the recesses, wherein the jaw crest (14) and the retaining plate (12) form an integral unit, and
the gum composition (22) and the accommodating jaw crest (14) are separable layers which are different from one another.

2. A dental model according to Claim 1, **characterised in that** the teeth have an undercut which acts against a respective undercut of the retaining plate (12).

3. A dental model according to one of the preceding Claims, **characterised in that** the teeth (16) are held elastically adherent in the retaining plate (12).

4. A dental model according to any one of the preceding Claims, **characterised in that** the teeth (16) are mounted substantially without play in the recesses (17).

5. A dental model according to any one of the preceding Claims, **characterised in that**, viewed from the retaining plate (12), the recesses (17) have diverging lateral flanks and the teeth (16) have tooth stumps (18) which fit the lateral flanks.

6. A dental model according to any one of the preceding Claims, **characterised in that** a plurality of undercuts of the retaining plate (12) are arranged spaced apart for mounting the gum composition (32) and fit undercuts in the gum composition (22) and, in particular, the surfaces to be joined together are produced by mutual impression.

7. A dental model according to Claim 6, **characterised in that** the mutually facing surfaces (28,30) of gum composition (22) and retaining plate (12), particularly in the vicinity of the jaw crest (14), have slight projections and recesses which imitate the natural gum and which improve adhesion.

8. A dental model according to any one of the preceding claims, in that the gum composition (22) has on its outer surfaces projections and recesses imitating the natural gum.

9. A dental model according to any one of the preceding Claims, **characterised in that** the teeth (16) correspond to teeth produced on a large scale, with regard to their laminar construction.

10. A dental model according to Claim 9, **characterised in that** the teeth (16) produced on a large scale are cut off at their tooth stumps (18) and extend as far as just above the bottom of the respective recess (17) formed in the retaining plate (12).

11. A dental model according to any one of the preceding Claims, **characterised in that** the teeth (16) consist of composite, i.e. a plastics material filled with filler, the hardness of which corresponds to the hardness of natural teeth.

12. A dental model according to any one of the preceding Claims, **characterised in that** the tooth stump (18) and recesses (17) are adapted in their conformation and mounting stiffness to the mounting stiffness of the natural jawbone for a natural tooth.

13. A dental model according to any one of the preceding Claims, **characterised in that** the retaining plate (12) has a marginal connecting depression for the gum composition (22), which makes possible a substantially flush connection of the gum composition (22) to the retaining plate (12).

14. A dental model according to any one of the preceding Claims, **characterised in that**, after use, the teeth (16) can be released individually from the guide in the retaining plate (12).

15. A dental model according to any one of the preceding Claims, **characterised in that** the retaining plate (12) has through-recesses which in the manner of bores (31) adjoin at the bottom the recesses (17) for the teeth (16).

16. A dental model according to any one of the preceding Claims, **characterised in that** the tooth stumps (18) of at least two adjacent teeth (16) correspond to one another but are different to at least one other tooth stump (18).

17. A dental model according to any one of the preceding Claims, **characterised in that** the tooth stumps (18) of the front teeth are of oval cross-section, the oval longitudinal axis extending in transverse direction relative to the jaw crest (14).
